# EUROPÄISCHE PATENTANMELDUNG

(11) **EP 2 631 083 A2**
(43) Veröffentlichungstag der Anmeldung: **28.08.2013**
(21) Anmeldenummer: 13000275.1
(22) Anmeldetag: 19.01.2013
(51) Int. Cl.: B42C 19/08, B65H 29/38, B65G 47/26

(54) **Vorrichtung zum Zuführen von Buchblocks in den Einfuhrkanal einer Weiterverarbeitungseinrichtung**

(30) Priorität: 21.02.2012 DE 102012003604
(71) Anmelder: Kolbus GmbH & Co. KG, 32369 Rahden (DE)
(72) Erfinder: Tas, Yahya, D-32351 Stemwede (DE); Régent, Nicolas, D-67808 Steinbach am Donnersberg (DE)

(57) **Zusammenfassung**

Bei einer Vorrichtung zum Zuführen von Buchblocks (2) in den Einfuhrkanal (11) einer Weiterverarbeitungseinrichtung, mit einem die Buchblocks (2) quer zur Förderrichtung des Einfuhrkanals (11) im Wesentlichen vertikal von oben in den Einfuhrkanal (11) zuführenden Buchblockanleger (30), ist vorgesehen, dass im Bereich des Buchblocksanlegers (30) wenigstens ein separat vom wenigstens einen Mitnehmer (14) des Einfuhrkanals (11) angetriebener Ausschieber (51) im Einfuhrkanal (11) vorgesehen ist. Durch den separaten Antrieb kann eine Abschiebebewegung definiert werden, die ein sanftes Anfahren des Ausschiebers (51) gegen den abzuschiebenden Buchblock (2) einerseits und eine synchrone Übergabe an den kontinuierlich laufenden Mitnehmer (14) des Einfuhrkanals (11) andererseits ermöglicht.

## Beschreibung

Die vorliegende Erfindung betrifft eine Vorrichtung zum Zuführen von Buchblocks in den Einfuhrkanal einer Weiterverarbeitungseinrichtung gemäß dem Oberbegriff des Anspruchs 1.

Mit einem Buchblockanleger werden flachliegend zugeführte Buchblocks in den Einfuhrkanal von Weiterverarbeitungseinrichtungen eingeschleust. Bekannt sind Buchblockanleger, die in Klebebindelinien im Übergang von der Zusammentragmaschine zum Klebebinder angeordnet sind. Dadurch kann der Klebebinder nicht nur zur Herstellung von klebegebundenen Broschuren eingesetzt werden, sondern auch zum Ableimen und Fälzeln von bereits fadengehefteten Buchblocks. Die gebundenen Buchblocks werden von einem quer zum Einfuhrkanal ausgerichteten Förderband einer nach unten gekrümmten Rutsche übergeben und im Wesentlichen vertikal von oben in den Einfuhrkanal abgeworfen, wobei die Zuführung taktgemäß mit den die Buchblocks im Kanal vorschiebenden Mitnehmern erfolgt.

Eine andere Bauart eines Buchblockanlegers ist aus der DE 71 25 313 U bekannt. Flachliegend zugeführte Buchblocks werden von einem intermittierend um eine parallel zur Kanalrichtung orientierte Drehachse rotierenden Anlegestern aufgerichtet, welcher als eine in Scheiben unterteilte Walze mehrere sternförmig angeordnete, jeweils rechtwinklig zueinander stehende erste und zweite Anlegeflächen aufweisende Ausschnitte als Blockaufnahmen aufweist. Die vom Anlegestern aufgestellten Buchblocks werden von einem Mitnehmer des Einfuhrkanals der Weiterverarbeitungseinrichtung abgefördert.

Bekannte Buchblockanleger haben den Nachteil, dass die quer in den Einfuhrkanal abgegebenen Buchblocks stoßartig von den kontinuierlich laufenden Mitnehmern erfasst und abgefördert werden. Dies kann bei hohen Verarbeitungsgeschwindigkeiten zu bleibenden Verformungen an den Buchblocks führen. Bei noch nicht gebundenen, losen Buchblocks, beispielsweise auf einer Digitaldruckmaschine hergestellten Buchblocks, können sich die einzelnen Blätter und/oder Viertelbogen durch die stoßartige Mitnahme derart zueinander verschieben, dass sie sich auch durch Rüttelung nicht wieder in eine ausgerichtete Formation zurückführen lassen. Kennzeichnend ist außerdem die starre Antriebskopplung des Buchblockanlegers mit dem Einfuhrkanal resp. der Weiterverarbeitungseinrichtung, wodurch ein von dem Buchblockanleger verarbeiteter Buchblock zwangsläufig einem bestimmten Mitnehmer des Einfuhrkanals und somit einem bestimmten Fördersegment der Weiterverarbeitungseinrichtung zugeführt wird. Eine flexible Verarbeitung der zugeführten Buchblocks ist nicht möglich.

Es ist Aufgabe der vorliegenden Erfindung, die gattungsgemäße Zuführeinrichtung derart weiterzubilden, dass bei hoher Verarbeitungsgeschwindigkeit eine schonende Behandlung von insbesondere lose zusammengetragenen Buchblocks gewährleistet ist und eine flexible Verarbeitung der zugeführten Buchblocks ermöglicht wird.

Diese Aufgabe wird gelöst durch eine Vorrichtung nach Anspruch 1. Die abhängigen Ansprüche definieren bevorzugte Ausführungsformen der erfindungsgemäßen Vorrichtung.

Erfindungsgemäß ist vorgesehen, dass im Bereich des Buchblocksanlegers wenigstens ein separat vom wenigstens einen Mitnehmer des Einfuhrkanals angetriebener Ausschieber im Einfuhrkanal vorgesehen ist. Durch den separaten Antrieb kann eine Abschiebebewegung definiert werden, die ein sanftes Anfahren des Ausschiebers gegen den abzuschiebenden Buchblock einerseits und eine synchrone Übergabe an den kontinuierlich laufenden Mitnehmer des Einfuhrkanals andererseits ermöglicht. Selbst bei hohen Verarbeitungsgeschwindigkeiten ist eine schonende Behandlung von insbesondere losen Buchblocks gewährleistet, wobei die Buchblocks auf die vergleichsweise hohe Fördergeschwindigkeit der Mitnehmer im Einfuhrkanal beschleunigt werden. Die Abschiebebewegung kann nach der Zuführposition und/oder der Formathöhe der Buchblocks veränderbar sein. Der Buchblockanleger mit dem im Einfuhrkanal zugeordneten wenigstens einen separat angetriebenen Ausschieber kann im Bedarfsfall, z.B. bei einer Störung der Weiterverarbeitungseinrichtung, von dem Einfuhrkanal der Weiterverarbeitungseinrichtung entkoppelt werden, wobei ein bereits im Einfuhrkanal aufgestellter Buchblock nicht mehr an den jeweiligen Mitnehmer des Einfuhrkanals übergeben wird. Andererseits kann eine gezielte Übergabe des aufgestellten Buchblocks an einen bestimmten Mitnehmer des Einfuhrkanals erfolgen, um bspw. den betreffenden Buchblock mit einem bestimmten Broschurenumschlag in der Weiterverarbeitungseinrichtung zusammenführen. Mit dem separat angetriebenen Ausschieber ist es außerdem möglich, nur jeden zweiten, dritten usw. Mitnehmer des Einfuhrkanals mit einem Buchblock zu versorgen, sodass die Weiterverarbeitungseinrichtung mit einer für eine gewünschte Qualität erforderlichen Mindesttaktgeschwindigkeit betrieben werden kann, die höher ist als der dem Buchblockanleger zugeführte oder vom Buchblockanleger max. verarbeitbare Buchblockförderstrom. Vorzugsweise ist der wenigstens eine Ausschieber zum wahlweisen Ausschieben der Buchblocks in entgegengesetzte Förderrichtungen ausgebildet, sodass bspw. die aufgestellten Buchblocks an verschiedene Weiterverarbeitungseinrichtungen übergeben werden können. Wenn dem Buchblockanleger eine dem Einfuhrkanal zur Weiterverarbeitungseinrichtung gegenüberliegende Querstapelauslage zugeordnet ist, können entgegengesetzt ausgeschobene Buchblocks als geordneter Stapel zur Handabnahme ausgelegt werden, beispielsweise um fehlerhaft erkannte Buchblocks von der Weiterverarbeitung auszuschließen und später, wenn die korrekte Zusammenführung mit einer Buchdecke und Umschlag sichergestellt ist, erneut über den Buchblockanleger der Weiterverarbeitungseinrichtung zuzuführen.

Der Buchblockanleger mit dem separat angetriebenen Ausschieber kann entlang des Einfuhrkanals der Weiterverarbeitungseinrichtung angeordnet werden, wenn der wenigstens eine Ausschieber zur Übernahme und zur Weiterleitung in den Einfuhrkanal von in Förderrichtung des Einfuhrkanals zugeführten Buchblocks ausgebildet ist. Durch eine im Bereich des Buchblockanlegers im Einfuhrkanal angeordnete Trennwand können in Förderrichtung des Einfuhrkanals und über den Buchblockanleger zugeführte Teilbuchblocks zusammengeführt und als vollständiger Buchblock der Weiterverarbeitungseinrichtung zugeführt werden.

In einer Weiterausgestaltung ist vorgesehen, dass an dem Einfuhrkanal wenigstens zwei Buchblockanleger angeordnet sind. Es können Teilbuchblocks aus unterschiedlichen Quellen zusammengeführt oder Buchblocks wahlweise von einem der wenigstens zwei Buchblockanleger angelegt werden.

Wenn der wenigstens eine Ausschieber aus dem Einfuhrkanal zurückziehbar ist, kann ein nächster Buchblock bereits aufgestellt werden, wenn sich der wenigstens eine Ausschieber noch in der Rückbewegung befindet. Eine weitere Leistungssteigerung kann erzielt werden, wenn mehrere an einem umlaufend antreibbaren Fördermittel angeordnete Ausschieber vorgesehen sind.

Vorzugsweise ist der Buchblockanleger ein intermittierend rotierender Anlegestern, dessen Rotationsachse parallel zum Einfuhrkanal orientiert ist.

Im Folgenden werden anhand der Zeichnung Ausführungsbeispiele der erfindungsgemäßen Vorrichtung beschreiben. Es zeigen rein schematisch
- **Fig. 1**: eine Seitenansicht von einem Anlegestern als Buchblockanleger;
- **Fig. 2**: eine Draufsicht des Anlegesterns;
- **Fig. 3**: eine vereinfachte Draufsicht des Anlegesterns mit einer Querstapelauslage;
- **Fig. 4**: eine Draufsicht von einer Anordnung mit zwei Anlegesternen.

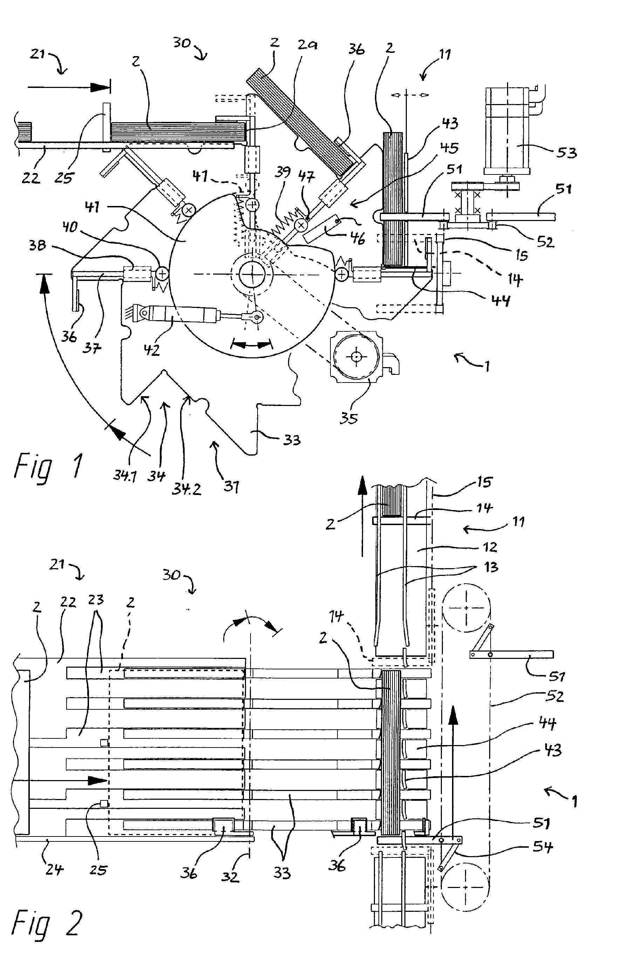

Die in den Figuren 1 und 2 gezeigte Zuführeinrichtung 1 dient der Zuführung von Buchblocks 2 zu einem Klebebinder als Weiterverarbeitungseinrichtung, wobei in den Figuren lediglich ein Ausschnitt eines Einfuhrkanals 11 des Klebebinders dargestellt ist. Die Buchblocks 2 werden im aus Kanalboden 12 und seitlichen Kanalführungen 13 gebildeten Einfuhrkanal 11 von in einem gleichen gegenseitigen Abstand zueinander an einer kontinuierlich umlaufenden Förderkette 15 angeordneten Mitnehmern 14 zu den Transportklammern des Klebebinders gefördert. Die Förderkette 15 ist antriebsmäßig mit dem Klebebinder gekoppelt. Die Zuführeinrichtung 1 kann auch an einer Buchfertigungsstraße oder einer anderen Weiterverarbeitungseinrichtung für Buchblocks angeordnet sein.

Die Zuführeinrichtung 1 weist einen Anlegestern 31 als Buchblockanleger 30 auf. Flachliegend von einem Zuführförderer 21 zugeführte Buchblocks 2 werden vom Anlegestern 31 übernommen und in einer zweistufigen Rotationsbewegung auf ihren Rücken 2 a gestellt und schließlich in den Einfuhrkanal 11 abgeschoben. Der im Ausführungsbeispiel gezeigte Zuführförderer 21 weist intermittierend vorschiebende Mitnehmer 25 auf, welche die Buchblocks 2 auf einem Gleitblech 22 unter Anlage an einer seitlichen Führung 24 zum Anlegestern 31 vorschieben. Die Buchblocks 2 können von Hand auf dem Zuführförderer 21 abgelegt werden oder über ein Förderband zum Zuführförderer 21 gelangen. Der Zuführförderer 21 kann auch als Riemenförderer ausgebildet sein.

Der von einem Servomotor 35 intermittierend rotierend angetriebene Anlegestern 31 ist eine in Scheiben 33 unterteilte Walze mit einer parallel zur Kanalrichtung orientierten Rotationsachse 32 und mit mehreren sternförmig angeordneten, jeweils rechtwinklig zueinander stehenden ersten und zweiten Anlegeflächen 34.1 und 34.2 aufweisenden Ausschnitten als Blockaufnahmen 34. Die einzelnen Scheiben 33 greifen durch Öffnungen 23 des Gleitblechs 22 und heben mit einsetzender Rotation des Anlegesterns 31 die Buchblocks 2 vom Zuführförderer 21 ab.

Der Anlegestern 31 weist mehrere, jeweils den Blockaufnahmen 34 zugeordnete, parallel zu den zweiten Anlegeflächen 34.2 angeordnete sowie zu diesen relativ bewegbare Klemmbacken 36 auf. Die Buchblocks 2 werden von den Klemmbacken 36 jeweils gegen die zweite Anlegefläche 34.2 gedrückt und dadurch während des Aufrichtens verschiebungs- und kippsicher in den Blockaufnahmen 34 fixiert.

Die Klemmbacken 36 befinden sich endseitig an einer in Linearführungen 38 geführten und von einer Zugfeder 39 in Klemmrichtung kraftbeaufschlagten Stange 37. Das Öffnen und Schließen der Klemmbacken 36 erfolgt über eine Steuerkurve 41, auf der an den Stangen 37 befindliche Kurvenrollen 40 während der Rotation des Anlegesterns 31 ablaufen. Die Klemmbacken 36 werden von der Steuerkurve 41 in eine maximal geöffnete Offenstellung aufgedrückt und zum Klemmen der Buchblocks 2 einfach freigegeben.

Um den jeweiligen Buchblock 2 noch vor einsetzender Rotation des Anlegesterns 31 in der betreffenden Blockaufnahme 34 zu fixieren, wird die Steuerkurve 41 im Stillstand des Anlegesterns 31 von einem taktgemäß angesteuerten Pneumatikzylinder 42 aus der in Fig. 1 gestrichelt gezeichneten Lage um einen bestimmten Winkelbereich in die durchgezogen gezeichnete Lage zur Freigabe der Kurvenrolle 40 und damit der Klemmbacke 36 vorgedreht und während der Rotation des Anlegesterns 31 wieder in die Ausgangslage zurückgedreht.

Im Anlegestern 31 ist eine Blockdickenmesseinrichtung 45 integriert. Mittels eines ortsfesten Magnetbandlesers 46 und auf den Stangen 37 angebrachte Magnete 47 wird während der Rotation des Anlegesterns 31 die jeweilige Klemmstellung der in Schließstellung gesteuerten Klemmbacken 36 erfasst und einer Auswertung zugeführt. Die gemessene Blockdicke kann für blockdickenabhängige Einstellungen der Weiterverarbeitungseinrichtung herangezogen werden und/oder es erfolgt eine Dickenkontrolle zur Vollständigkeitsprüfung mit der Möglichkeit zur gezielten Ausschleusung von der weiteren Verarbeitung.

Die Steuerkurve 41 ist derart ausgebildet, dass die Klemmbacken 36 unmittelbar vor Erreichen der Aufrichtposition geöffnet werden. In der Aufrichtposition werden die Buchblocks 2 auf einen Kanalboden 44 abgestellt, unter seitlicher Abstützung durch die zweite Anlegefläche 34.2 einerseits und durch auf Blockdicke einstellbare Führungsbleche 43 andererseits.

Erfindungsgemäß ist im Bereich des Buchblocksanlegers 30 ein separat von den Mitnehmern 14 des Einfuhrkanals 11 angetriebener Ausschieber 51 vorgesehen. Mittels dieses Ausschiebers 51 wird der jeweils aufgerichtete Buchblock 2 in Richtung Einfuhrkanal 11 abgeschoben und quasi im Gleichlauf an die Mitnehmer 14 übergeben.

Im Ausführungsbeispiel sind zwei an einer umlaufenden Förderkette 52 angeordnete Ausschieber 51 vorgesehen, die abwechselnd das Abschieben der Buchblocks 2 übernehmen. Die Ausschieber 51 sind jeweils über eine zusätzlich an der Förderkette 52 angelenkte Koppel 54 derart geführt, dass sie nach der Übergabe der Buchblocks 2 an den Mitnehmer 14 des Einfuhrkanals 11 stets quer zur Förderrichtung orientiert aus dem Einfuhrkanal 11 zurück gezogen werden.

Der Antrieb der Förderkette 52 erfolgt mit einem separaten Servomotor 53, womit ein sanftes Anfahren der Ausschieber 51 gegen den jeweils abzuschiebenden Buchblock 2 einerseits und eine synchrone Übergabe an die kontinuierlich laufenden Mitnehmer 14 des Einfuhrkanals 11 andererseits ermöglicht wird. Die Abschiebebewegung kann nach der Zuführposition und/oder der Formathöhe der Buchblocks 2 veränderbar sein. Der separate Antrieb der Ausschieber 51 kann auch dafür genutzt werden, die Übergabe an den Einfuhrkanal 11 auszusetzen bzw. die Buchblocks 2 bestimmten Mitnehmern 14 und damit bestimmten Transportklammern des Klebebinders zuzuführen.

In der Draufsicht von Fig. 2 ist der Anlegestern 31 im Einfuhrkanal 11 integriert. An einer weiter hinten liegenden Stelle des Einfuhrkanals 11 zugeführte Buchblocks 2 können an dem Anlegestern 31 vorbeigeführt werden, indem die Buchblocks 2 von den Ausschiebern 51 aus dem zuführenden Kanalabschnitt übernommen und in den weiterführenden Kanalabschnitt überführt werden. Der Einfuhrkanal 11 ist quasi im Bereich des Buchblockanlegers 30 unterbrochen und durch den separat angetriebenen Ausschieber 51 überbrückt.

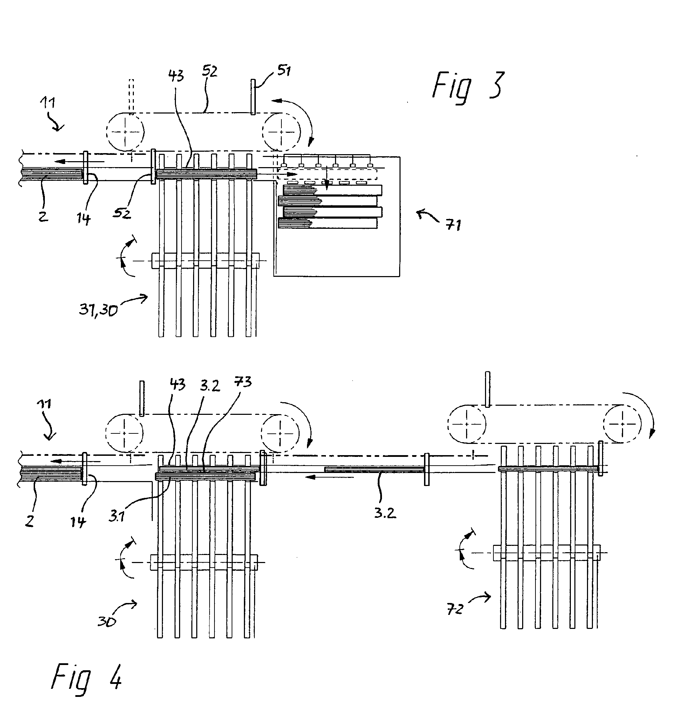

Fig. 3 zeigt eine dem Einfuhrkanal 11 zur Weiterverarbeitungseinrichtung gegenüberliegende Querstapelauslage 71. Die vom Anlegestern 31 aufgerichteten und in den Einfuhrkanal 11 abgestellten Buchblocks 2 werden wahlweise in zum Einfuhrkanal 11 entgegen gesetzte Richtung abgeschoben und der Querstapelauslage 71 zur versetzten Stapelbildung zugeführt, beispielsweise um fehlerhaft erkannte Buchblocks 2 von der Weiterverarbeitung auszuschließen und in einem späteren Zeitpunkt erneut über den Anlegestern 31 der Weiterverarbeitungseinrichtung zuzuführen. Die Ausschieber 51 sind zum Fördern in beide Richtungen ausgebildet. Statt der Querstapelauslage 71 kann eine zweite, alternative Weiterverarbeitungsrichtung an dem Buchblockanleger 30 angeschlossen sein.

Fig. 4 zeigt die Anordnung eines zweiten Buchblockanlegers 72. Hierüber angelegte zweite Teilblocks 3.2 werden mit über den ersten Buchblockanleger 30 angelegten ersten Teilblocks 3.1 zu vollständigen Buchblocks 2 zusammengeführt und dem Einfuhrkanal 11 übergeben. Im Bereich des ersten Buchblockanlegers 30 ist hierzu eine Zwischenwand 73 vorgesehen, um den zweiten Teilblock 3.2 neben den ersten Teilblock 3.1 zu schieben. Die zwei Buchblockanleger 30, 72 können auch zur wahlweisen Zuführung von Buchblocks 2 eingesetzt werden.

## Patentansprüche

1. **Vorrichtung** zum Zuführen von Buchblocks (2) in den Einfuhrkanal (11) einer Weiterverarbeitungseinrichtung,
wobei der Einfuhrkanal (11) einen Kanalboden (12), seitliche Kanalführungen (13) und wenigstens einen die auf ihrem Rücken (2 a) oder Vorderschnitt stehenden Buchblocks (2) vor sich her schiebenden Mitnehmer (14) aufweist,
mit einem die Buchblocks (2) quer zur Förderrichtung des Einfuhrkanals (11) im Wesentlichen vertikal von oben in den Einfuhrkanal (11) zuführenden Buchblockanleger (30),
**dadurch gekennzeichnet,**
**dass** im Bereich des Buchblocksanlegers (30) wenigstens ein separat vom wenigstens einen Mitnehmer (14) des Einfuhrkanals (11) angetriebener Ausschieber (51) im Einfuhrkanal (11) vorgesehen ist.

2. Vorrichtung nach Anspruch 2, **dadurch gekennzeichnet, dass** der wenigstens eine Ausschieber (51) zum wahlweisen Ausschieben der Buchblocks (2) in entgegen gesetzte Förderrichtungen ausgebildet ist.

3. Vorrichtung nach Anspruch 1 oder 2, **dadurch gekennzeichnet, dass** dem Buchblockanleger (30) eine dem Einfuhrkanal (11) zur Weiterverarbeitungseinrichtung gegenüberliegende Querstapelauslage (71) zugeordnet ist.

4. Vorrichtung nach einem der Ansprüche 1 bis 3, **dadurch gekennzeichnet, dass** der wenigsens eine Ausschieber (51) zur Übernahme und zur Weiterleitung in den Einfuhrkanal (11) von in Förderrichtung des Einfuhrkanals (11) zugeführten Buchblocks (2) ausgebildet ist.

5. Vorrichtung nach Anspruch 4, **gekennzeichnet durch** eine im Bereich des Buchblocksanlegers (30) im Einfuhrkanal (11) angeordnete Trennwand (73) zur Zusammenführung von in Förderrichtung des Einfuhrkanals (11) und über den Buchblockanleger (30) zugeführten Buchblocks (2).

6. Vorrichtung nach einem der Ansprüche 1 bis 5, **dadurch gekennzeichnet, dass** an dem Einfuhrkanal (11) wenigstens zwei Buchblockanleger (30, 72) angeordnet sind.

7. Vorrichtung nach einem der Ansprüche 1 bis 6, **dadurch gekennzeichnet, dass** der wenigstens eine Ausschieber (51) aus dem Einfuhrkanal (11) zurückziehbar ist.

8. Vorrichtung nach einem der Ansprüche 1 bis 7, **gekennzeichnet durch** mehrere an einem umlaufend antreibbaren Fördermittel (52) angeordnete Ausschieber (51).

9. Vorrichtung nach einem der Ansprüche 1 bis 8, **dadurch gekennzeichnet, dass** der Buchblockanleger (30) ein intermittierend rotierender Anlegestern (31) ist, dessen Rotationsachse (32) parallel zum Einfuhrkanal (11) orientiert ist.
